# EUROPEAN PATENT SPECIFICATION

(11) **EP 2 727 424 B1**
(45) Date of publication and mention of the grant of the patent: **25.01.2017**
(21) Application number: 11733931.7
(22) Date of filing: 29.06.2011
(51) Int. Cl.: H04W 56/00

(54) **A METHOD AND A USER EQUIPMENT FOR PEER-TO-PEER COMMUNICATION**
METHODE UND BENUTZERGERÄT ZUR PEER-TO-PEER KOMMUNIKATION
PROCÉDÉ ET ÉQUIPEMENT D'UTILISATEUR POUR COMMUNICATION PAIR-À-PAIR

(43) Date of publication of application: 07.05.2014
(73) Proprietor: Telefonaktiebolaget LM Ericsson (publ), 164 83 Stockholm (SE)
(72) Inventor: MILDH, Gunnar, S-192 55 Sollentuna (SE); FODOR, Gabor, S-165 52 Hässelby (SE); PARKVALL, Stefan, S-113 25 Stockholm (SE); DAHLMAN, Erik, S-112 23 Stockholm (SE)
(74) Representative: Röthinger, Rainer
(86) International application number: PCT/SE2011/050863
(87) International publication number: WO 2013/002688

(56) References cited:
- WO-A1-2004/102833
- WO-A1-2005/053347
- US-A1- 2011 082 939

## Description

### TECHNICAL FIELD

The present invention relates to a method and a user equipment for enabling peer-to-peer communication with other user equipments. In particular, it relates to a method and a user equipment according to the present embodiments for synchronizing with another user equipment for peer-to-peer communication in a cellular infrastructure.

### BACKGROUND

Within the field of telecommunications, so called device-to-device (D2D) communication has been promoted as a means to provide peer-to-peer services between user equipments (UEs). An advantage with using D2D communication is that the capacity of a radio communication network is enhanced since traffic between UEs need not necessarily pass through the radio communication network nodes. As a result, the radio communication network may be offloaded in terms of traffic between UEs. Moreover, D2D communication enables infrastructure-less communication between user equipments. This may be of importance in, for example, emergency, national security and public safety situations, since during these situations load on the radio communication network(s) is generally high. Furthermore, an emergency situation may for example occur where only limited coverage by the radio communication system is provided. In such situation, D2D communication may improve coverage by allowing a UE to connect to the radio communication network via another UE. In addition, local communication between UEs using D2D communication is achievable without a need for radio coverage by the radio communication system or in general, the radio coverage of a cellular infrastructure independently whether the infrastructure comprises one radio access technology (RAT) or a plurality of RATs.

It has been proposed to adopt the Bluetooth master-slave concept in order to implement D2D communication for user equipments in cellular systems such as Long Term Evolution (LTE) system, WCDMA based system, WiMax, etc.

Some level of synchronization is required between a transmitter and a receiver e.g. between UEs or any type of communication devices requiring synchronization, to be able to communicate with each other. In other words, for any radio communication link, synchronization is required for enabling a receiver to decode information content transmitted by a transmitter.

In general, synchronization can take place on many levels, for example:
- Frequency level in which the transmitted carrier frequency (ies) should not deviate too much from the expected carrier frequency(ies) in the receiver;
- Symbol level or chip level in which the receiver needs knowledge on when the next symbol starts;
- Frame level in which the transmission is usually divided into higher level transmission frames or slots. For this level, the receiver needs to know when each frame or slot starts or ends.
- Packet level in which the information is usually partitioned in different information packets. For this level, the receiver needs to know which lower level symbols belong to the same packet.

In for example an orthogonal frequency division multiplexing (OFDM) based system such as LTE; synchronization in general refers to time and frequency synchronization. Time synchronization means that the receiver node is able to determine the exact time instant at which the OFDM symbol starts. This knowledge is necessary for the receiver to correctly position its discrete Fourier transform (DFT) window and ultimately to decode the transmitted symbol. Frequency synchronization means that the transmitter and receiver use equal carrier frequencies and frequency spacing for their respective subcarriers. Frequency synchronization methods therefore try to eliminate the carrier frequency offset (CFO) caused by, for example, the mismatch of the local oscillators at the transmitter and receiver and Doppler shift.

Synchronization between the transmitter and the receiver can be achieved in many ways. Time synchronization can be achieved by the sender adding synchronization information in the transmitted signal. The synchronization information can be made up of a predefined sequence of symbols or waveforms which the receiver is designed to look for. Once the receiver finds the synchronization symbols, it can also achieve symbol synchronization for data symbols. It is also possible to achieve synchronization from another source, e.g. from a common clock signal or an absolute time signal.
Frequency and phase synchronization can be achieved using phase locked loops (PLL). Frame and packet synchronization can be achieved in similar ways as time synchronization, but can also include the transmission of frame numbers with each frame or packet, or at a given time related to the synchronization symbols.

In LTE downlink (DL) synchronization is achieved by specially designed dedicated signals known as a primary synchronization signal (PSS) and a secondary synchronization signal (SSS) PSS and SSS) and associated physical layer procedures. In greater details, PSS and SSS are usually broadcasted by a base station i.e. eNB in the case of a LTE system. The PSS/SSS signals together encode information about cells of the base station. For example, information about physical layer cell identity (PHY Cell ID or "PCI" or "PID" for short) composed by the physical layer cell identity group (0...167) and the physical layer identity (0, 1 or 2) is encoded into the PSS/SSS signals. The PSS and SSS are constructed such that the a UE can find and lock onto these signals on, for example power up of the UE. Thereafter, the UE can decode the PCI.

Uplink (UL) synchronization is based on a specially designed random access preamble transmitted by the UE and also on a specific demodulation reference signal (DRS).The preamble and the DRS are well known within the art of synchronization.

A common underlying assumption for synchronization in cellular networks is that the base station provides a natural central unit, with which all UEs in a cell can synchronize. The synchronization is made possible by specially designed physical layer procedures, reference signals and synchronization channels in the UL and in DL. It should be noted that neighboring base stations may or may not be synchronized with each other. Synchronization between neighboring base stations is, in principle, dependent on system configuration and/or design.

Synchronization methods used in other than cellular technologies or RATS usually also rely on predefined bit sequences and physical layer procedures. For example in wireless adhoc networks such as Bluetooth, synchronization involves both time (clock) and frequency hopping sequence synchronization. In a Bluetooth piconet, the clock and the hopping sequence of the master device are used as a common reference for all slave devices of that piconet. This synchronization can be preserved in idle mode, in so called park mode, to allow for a fast wake up from this mode. To gain an initial synchronization, Bluetooth (BT) slave devices look for a predefined synchronization bit pattern. A BT packet contains a special sync field to help the transmitter and receiver maintain continuous synchronization.

As previously described, synchronization between a transmitter (UE) and a receiver (UE) is required for enabling peer-to-peer communication between the UEs. Peer-to-peer communication between UEs is also known as device-to-device (D2D) communication.

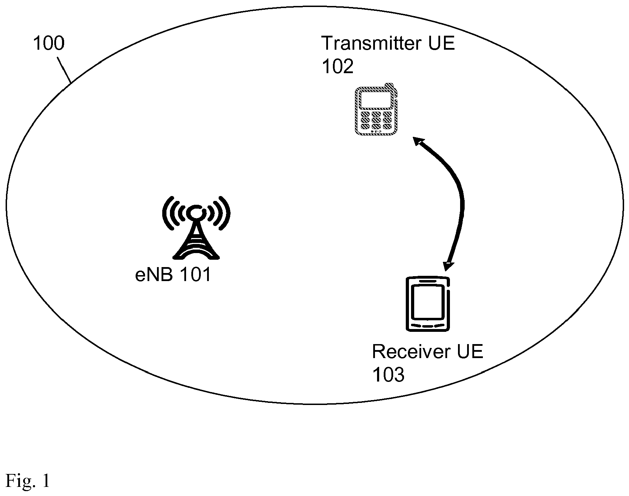

D2D communication between cellular UEs that are in close proximity of each other means that the devices use a direct link rather than using the cellular access point (base station). This scenario is illustrated in the very simplified network 100 of Fig 1 showing a radio base station denoted eNB 101; a transmitting UE 102 and a receiving UE 103. As shown, UE 101 is communicated directly with UE 102. Such direct mode of communication has, as previously mentioned advantages in terms of overall capacity, user experience and energy efficiency.

It is clear from the above that in order for UEs to communicate directly with each other in a D2D mode of operation, UEs need to be synchronized, which can be done according to the principles discussed in earlier. For D2D communication in cellular spectrum, achieving synchronization may be important for the following reasons:
- To know in time when one device is trying to communicate with another device, so that the devices do not need to continuously scan for paging and beacon signals;
- To synchronize the frequency to achieve better quality of the reception and to reduce inter-carrier-interference (ICI);
- To synchronize in time to reduce inter-symbol-interference (ISI);
- To synchronize in time or frequency to avoid interference from other users of the spectrum in e.g. a system employing time division multiple access /frequency division multiple access (TDMA / FDMA)
To achieve code synchronization when spreading or scrambling codes are used in systems that make use of spreading and scrambling operations.

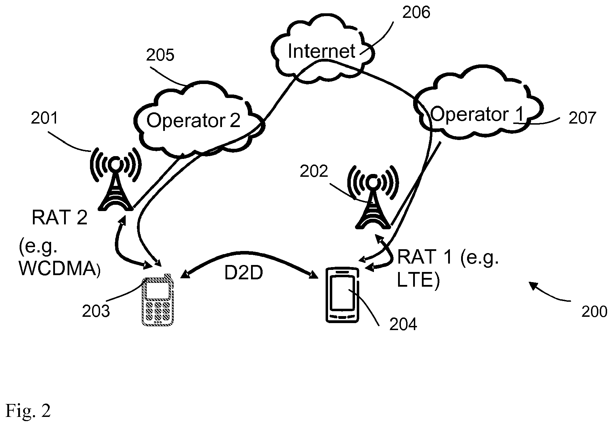

For D2D communication in cellular networks, in contrast to adhoc technologies such as Bluetooth or WiFi Direct, the UEs involved in D2D are capable in maintaining control channels and are capable in receiving paging from the cellular base station (e.g. eNB). The two devices involved in the communication may also have a simultaneous connection to external networks (e.g. Internet) making it possible to communicate via the external network prior to setting up the D2D link. D2D communication is also possible in scenarios where the UEs are connected to different cellular base stations and even different radio access technologies (RATs) and operators as illustrated in the simplified cellular infrastructure 200 of Fig. 2. In Fig. 2, only two radio base stations are shown although not restricted to only two. Radio base station 201 denoted NodeB belongs to RAT 1 being a WCDMA based RAT and radio base station 202 denoted eNB belongs to RAT 2 being a LTE based RAT. Note that the use of WCDMA and LTE are only examples. In other words RAT 1 and/or RAT 2 etc. could belong to GSM or WiMAX or any suitable RAT. Also shown are 2 UEs 203 and 204 communicating directly with each other via a D2D link. UE 203 is shown connected to RAT 1 whereas UE 204 is shown connected to RAT 2. The UEs 203 and 204 may also communicate via an external network e.g. the Internet 206 as schematically depicted. Fig. 2 also depicts two operator networks 205 for operator 1 and 207 for operator 2. Note that the cellular infrastructure of Fig. 2 could also include a global positioning system (GPS) via which the UEs can communicate.

The prior art synchronization methods explained earlier either assume cellular networks in which synchronization is needed between a central base station and UEs or wireless ad-hoc networks in which a synchronization method is both time and energy consuming.

A possible solution to achieve D2D synchronization is to rely only on D2D transmissions between the UEs. This type of solution would be similar to how synchronization is achieved for ad-hoc networks. The drawback of this solution is that the receiving UE does not know exactly when the transmitting UE transmits so it needs to monitor the medium for a certain period of time in order to detect any possible synchronization signals. Monitoring the medium could involve excessive processing leading to increased power consumption or the need for dedicated hardware solutions (e.g. matched filter). Setting aside radio resources in the system for D2D synchronization e.g. a random access channel for synch, extra synchronization symbols or training sequences lead to some capacity waste.

Another possibility to achieve synchronization is to let both the receiver and the transmitter have access to an absolute synchronization source. Examples of such sources could be GPS transmissions or radio clocks (long wave, short wave). The drawback with these solutions is however that the coverage for GPS transmissions and other radio clocks solutions might be poor in certain radio environments such as indoor, subway system etc.

Another possibility to achieve synchronization is to design wireless network or radio access network (RAN) functionality that provides synchronization information to both UEs that are involved in D2D communication. The drawback with this solution is that it has impact on the cellular networks as it requires new functionality(ies) and possibly also new types of terminals.

### SUMMARY

An object according to the present embodiments is to alleviate at least some of the problems mentioned above. A further object according to some embodiments is to provide a mechanism for enabling synchronization between UEs in a cellular infrastructure that may include different RATs, cells, operators, GPS etc. and wherein the UEs may even be connected to different base stations and/or RATs not necessarily synchronized with each other. Yet another object of some embodiments is to enable UEs to negotiate and agree on a common synchronization source.

Thus, according to an aspect of exemplary embodiments, at least some of the above stated problems are solved by means of a method in a UE or for use in a UE for synchronizing a first UE with a second UE for peer-to-peer or D2D communication between first and second UEs being in proximity of one another in a cellular infrastructure comprising a plurality of radio access technologies, RATs and cells. The method comprises: receiving at the first UE, a synchronization message from at least one source or at least one RAT or at least one cell of the cellular infrastructure; assembling, at the first UE, a message comprising a first list including information on the at least one source or the at least one RAT or the at least one cell from which the first UE received the synchronization message; transmitting from the first UE, via the cellular infrastructure, the assembled message, to the second UE, and initiating synchronized peer-to-peer communication with the second UE based on the received synchronization message from the at least one source or at least one RAT or the at least one cell of the cellular infrastructure.

According to another aspect of exemplary embodiments, at least some of the above stated problems are solved by means of a UE for synchronizing with another UE for peer-to-peer communication between the UE and the other UE being in proximity of one another in a cellular infrastructure comprising a plurality of RATs and cells. The UE comprises: a receiver circuit configured to receive a synchronization message from at least one source or at least one RAT or at least one cell of the cellular infrastructure; the UE further comprises a processing unit configured to assemble a message comprising a first list including information on the at least one source or the at least one RAT or at least one cell from which the UE received the synchronization message; the UE further comprises a transmitter circuit configured to transmit via the cellular infrastructure, the assembled message, to the other UE, and also comprises a synchronization circuit configured to initiate synchronized peer-to-peer communication with the other UE based on the received synchronization message from the at least one source or at least one RAT or the at least one cell of the cellular infrastructure.

According to an embodiment, the receiver circuit of the UE is further configured to receive from the other UE a message comprising a second list including information on at least one source or at least one RAT or at least one cell from which the other UE received a synchronization message, and the synchronization circuit and/or the processing unit is/are further configured to negotiate with the other UE on a common source of synchronization based on the information in the first and second lists.

According to yet another aspect of the present embodiments there is provided a cellular infrastructure comprising a plurality of RATs, cells, a first UE and a second UE being in proximity of one another, for synchronizing between the first UE and the second UE for peer-to-peer communication between the first and second UEs. In the cellular infrastructure, the first UE is configured to receive a synchronization message from at least one source or at least one RAT or at least one cell of the cellular infrastructure; the first UE is further configured to assemble a message comprising a first list including information on the at least one source or the at least one RAT or at least one cell from which the first UE received the synchronization message; the first UE is further configured to transmit via the cellular infrastructure, the assembled message to the second UE; the second UE is configured to receive the assembled message and the second UE is configured to assemble a message comprising a second list including information on at least one source or the at least one RAT or at least one cell from which the second UE received a synchronization message; the first and second UEs are configured to negotiate on a common source of synchronization based on information in the first list and in the second list, and the first UE and/or the second UE is/are configured to initiate synchronized peer-to-peer communication between each other based on the respectively received synchronization messages from the at least one source or at least one RAT or the at least one cell of the cellular infrastructure.

An advantage with the present embodiments is to achieve synchronization also in areas having no coverage for satellite positioning and timing systems such as GPS or other absolute time sources.

Another advantage with the present embodiments is that synchronization between UEs is achieved even if cellular networks of the cellular infrastructure are not themselves synchronized towards some absolute time.

A further advantage is that synchronization between UEs may be performed transparently to the cellular network so it is not required to upgrade the cellular network to support the functionality according to the present embodiments.

Yet another advantage is that since UEs may obtain synchronization also from cell which they are not connected to and might even belong to different operators, it is possible for UEs to achieve synchronization even when they are not connected to the same cell or operator.

### BRIEF DESCRIPTION OF THE DRAWINGS

Figure 1 is a diagram illustrating a known D2D communication mode using a direct link between UEs.
Figure 2 is a diagram illustrating a cellular infrastructure wherein the exemplary embodiments may be applied.
Figure 3 illustrates a signalling scheme according to an exemplary embodiment.
Figure 4 is a flowchart illustrating main method steps performed by a UE according to the present embodiments.
Figure 5 is a block diagram illustrating an exemplary user equipment according to the present embodiments.

### DETAILED DESCRIPTION

Briefly described, exemplifying embodiments of a UE and method in or for use in the UE are provided for achieving synchronization between UEs in a cellular infrastructure for enabling the UEs to have a peer-to-peer or D2D communication with each other. The UEs according to the present embodiments are configured to agree using signaling via e.g. an external network on a common reference that may be used as a basis for D2D synchronization. The common reference can for example serve as a common clock or common third party frequency reference. Using such common reference(s), the UEs may also agree on a time instant at which they will start to communicate, reduce their respective carrier frequency offsets and synchronize their local clocks. The common reference may be any available radio cell of any cellular technologies and also other radio synchronization source e.g. GPS when it is available and supported by all the UEs involved in the communication. As clear from above, only functionality of the UEs is required and no changes to the networks for supporting this functionality are needed.

In the following, a detailed description of the exemplary embodiments of the present invention is described in conjunction with the drawings, in several scenarios to enable easier understanding the solution(s) described herein.

Considering the cellular infrastructure 200 of Fig. 2, which as described earlier could also include GPS and also any number of RATs, let us assume that UE 203 and UE 204 are in the vicinity of each other and would like to communicate with each other using D2D or peer-to-peer communication. As a certain point in time, the UEs may communicate with each other via the cellular infrastructure 200 and external network (e.g. Internet), possibly using different RATs e.g. RAT 1 and RAT 2. For example, UE A may be communicating via UE B; UE A may sue a highspeed packet access (HSPA) network while UE B may be using a GSM network. Hence RAT 1 and RAT 2 are not necessarily WCDMA and LTE respectively.

Using prior art methods, in a first step, UE A 203 and UE B 204 discover that they are in physical proximity of one another and that they are already communicating or would like to communicate. In a second step, one of the UEs e.g. UE 203 obtain or receive synchronization or a synchronization message from at lest one or more (radio synchronization) sources, RATs or (cellular) cells, in the area. The operation or act of obtaining or receiving synchronization is done using existining prior art method defined for that technology (e.g. GSM, WCDMA, LTE, CDMA2000, WiMAX, GPS, etc). Hence the exemplary embodiments are not restricted to any particular method or approach of obtaining the synchronization message.

In a third step, UE 203 assembles, in according with the present embodiments, a message comprising a (first) list including information on the at least one source or the at least one cell or the at least one RAT from which UE 203 acquired or received the synchronization message. In addition to information about the synchronization source, RAT or cell, information may further include carrier frequency or frequencies used by the at least one source and/or cell and/or RAT, cell identity or cell identities, frame number(s), hopping sequence(s), timing of D2D communication e.g. a time in the future relative the synchronization source or RAT or cell when UE 203 will transmit or receive D2D transmission; information about configuration of the actual D2D communication e.g. frequency, timeslot, transmission formats etc. The (first) list may also contain PSS/SSS information; operator identities e.g. PLMN(s), capabilities of UE 203; type of RAT or source or cell used, cell identity or cell identities, etc. Hence the list may contain a plurality of information needed for the purpose of achieving synchronization in accordance with the present embodiments. The list is not exhaustive and is not in way restricted to the information above.

After that the assembled message is ready, UE 203 is configured to transmit the assembled message, via the cellular infrastructure to the other UE 204. Following that, UE 203 initiates synchronized peer-to-peer communication with UE 204 based on the received synchronization message from the at least one source or the at least one RAT or the at least one cell of the cellular infrastructure.

In the same way as for UE 203, UE 204 may obtain synchronization from the source or the same RAT or the same cell, although not necessarily to achieve synchronization with UE 203 for D2D or peer-to-peer communication. UE 204, in accordance with an embodiment is further configured to assemble a message comprising a (second) list including information on at least one source or at least one RAT or at least one cell from which UE 204 received a synchronization message and UE 203 and UE 204 may negotiate with each other on a common source of synchronization based on the information in the first list obtained from UE 203 and based on the information in the second list that is included in the message assemble by UE 204.

According to an exemplary embodiment, in case UE 203 and UE 203 are obtaining the synchronization message(s) from a single radio source or cell or RAT, there is a risk that the synchronization will be off a bit between the UEs due to different time of arrival of the relative synchronization signal(s). It is however not expected that this offset will have a significant impact on the performance of the synchronization but as an enhancement to the solution above it is possible for the UE 203 or UE 204 to obtain and transmit synchronization information from multiple sources. In this case the UE 203 or UE 204 may also transmit timing offset information between the sources in the case the multiple source are not synchronization with each other. The advantage of using multiple sources for synchronization is that the UEs can average over the multiple sources to achieve a better result e.g. to minimize errors, benefiting from multiple geographically distributed sources. The averaging may therefore be performed by UE 203 and/or UE 204 based on received synchronization messages from the different sources, RATs, cells etc. According to an embodiment, the averaging is performed based on timing offsets received by UE 204 from the different sources or different RATs or different cell. UE 204 would use this averaging over timing offsets to increase accuracy of the synchronization e.g. remove time offset error. It should be noted that averaging over the different receptions of synchronization messages allows UE 203 to reduce errors. In the event UE 203 does not know if the sources, RATs or cells are synchronized with each other, UE 203 may perform average between multiple receptions of synchronization messages from each source instead of performing the averaging between sources.

According to another exemplary embodiment another benefit of transmitting multiple sources or RATs or cells for synchronization from UE 203 to UE 204 or vice versa is that it makes it possible for UE 203 or UE 204 to select a source or cell or RAT which it receives with a strong and/or adequate signal, and e.g. skip weak synchronization signals or signals in general from sources or RATs or cells.

In addition to this selection functionality in UE 204 or UE 203 it is also possible as mentioned earlier to negotiate between the UEs on which source or RAT or cell to use, e.g. UE 204 sends a message containing a list of sources it can receive based on radio conditions as well as UE 204 terminal capabilities e.g. supported RATs, frequency bands, etc. UE 203 can then pick one source or RAT or cell for synchronization and respond to UE 204 with a synchronization message for this source or RAT or cell.

Hence in accordance with an embodiment UE 203 and UE 204 are configured to perform selection of a source or a RAT or a cell among the at least one source or the at least one RAT or the at least one cell included in the first and/or second list and/or in said second list for initiating said synchronized peer-to-peer communication with each other based on the selection. The selection, as described above may be based on the strongest signal and a negotiation procedure may be performed between the UEs to select e.g. the strongest signal or the most adequate signal in order not to jeopardize the upcoming D2D communication. The list in the assembled message may further be determined on capabilities of UE 203 and/or UE 204.

According to a further embodiment the message received by UE 203 from UE 204 includes priority information on which synchronization sources or RATs or cells of the cellular infrastructure that are preferred for enabling peer-to-peer communication between the UEs. The preference may be based on source accuracy, received power or quality, speed of obtaining synch, currently used frequency by the RAT or cell or source. The UE 203 may then select a source or RAT or cell which has high priority both in UE 203 and UE 04. This makes it possible to speed up the synchronization and obtain better results. Note that the above applies also for UE 203 i.e. UE 203 is also configured to send the priority information to UE 204 and let UE 204 select a source or RAT or cell as indicated above.

According to yet another embodiment, UE 203 or UE 204 is further configured to trigger measurements on at least one cell, or at least one source or at least one RAT not currently serving UE 203 (or UE 204) for determining information on the cell, source or RAT to be included in the list(s). This triggering operation may be due to that UEs typically do not measure on other cells or other frequency / RATs when the current cell quality is good in terms of reference signal received power or more precisely according to the so called "S-criterion". Hence, in order to improve the chances to find a common synchronization source or cell or RAT for UE 203 and UE 204 trigger measurements on other cells / RATs / frequency bands even if the current serving cell is good enough. Such triggering may be local in the UEs or the network may provide information, either triggered by the UE, or periodically using broadcast channels about neighboring cells / RATs / bands which may be used to assist the measurements in the UE. The network may also provide information about the relative synch between different cells in the networks making it possible for the UEs to calculate the expected offset between different cells, in case UE 203 and UE 204 do not receive from the same cell.

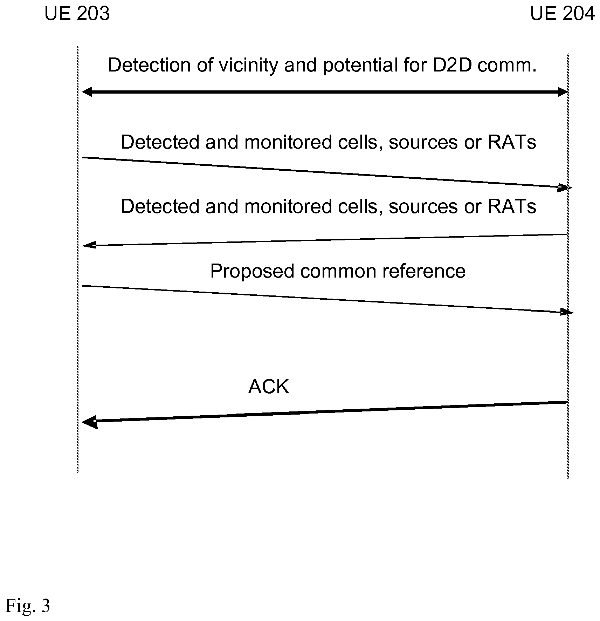

Referring now to Fig. 3, there is illustrated an example signaling flow of a process in accordance with one or several embodiments described earlier. Note that the signaling diagram is only an example and is not restricting the embodiments of the present invention. As shown in this example, the UEs 203 and 204 detect that they are in vicinity or in proximity with each other for potential D2D communication and the UEs exchange information about which synchronization sources or cells or RATs they may receive, the UE 203 proposes one or more sources or cells or RATs detected and to be used, and then UE 204 acknowledges the proposal by sending information on detected and monitored cells and a common reference is negotiated and/or proposed. After that synchronization can be achieved from the source or the cell or the RAT and D2D communication can start/initiate and complete.

It should be mentioned that instead of providing the list of detected cells to UE 203, UE 204 can directly propose a synchronization source or cell or RAT, or provide a list where it has filtered the UE 203 suggestion with the acceptable sources or RATs or cells for UE 204.
Note also that In case no common source is achieved it would be possible for UE 204 to send a message to UE 203 notifying UE 203 that no common source has been found. In this case D2D synchronization might need to be achieved using traditional ad-hoc schemes. Furthermore, it is also possible in the preparation phase of the synchronization to transmit, as previously described, information from UE 204 to UE 203 about the UE capabilities of UE 204. The advantage with this is that it makes it possible for UE 23 to only try to obtain synchronization from sources or cells or RATs supported by UE 204, which could save time in the synchronization process. It is also possible to provide information about which current frequency or carrier band(s) the UEs are camping on, in case that makes it possible to speed up the process by using the same band.

As previously described, the exemplary embodiments of the present invention provide a plurality of advantages. One of them is that it is possible to achieve synchronization also in areas with no coverage for satellite positioning and timing systems such as GPS or other absolute time sources. It also does not require that the cellular networks or sources or RATS themselves are synchronized towards some absolute time. The synchronization may be performed transparently to the cellular network or source or RAT so it is not required to upgrade the cellular network to support the functionality. Since the UEs can obtain or retrieve or receive synchronization also from cells or RATs or sources which they are not connected to and might even belong to different operators, it is possible for UEs to achieve synchronization even when they are not connected to the same cell or operator; it is sufficient if they can receive signals from a cell or source or RAT or from common cell or common source or common RAT.

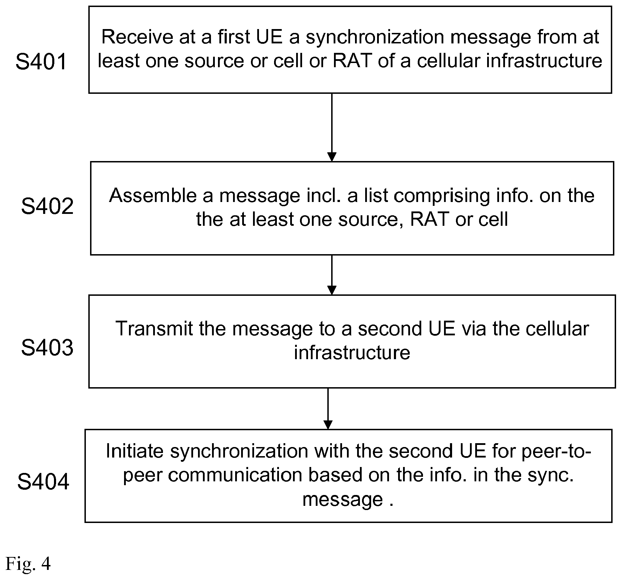

Referring to Figure 4, there is depicted the main steps performed for use in a UE in accordance with the previously exemplary embodiments. The main steps performed by a first UE for achieving synchronization with a second UE for peer-to-peer communication and wherein the UEs are in proximity of one another in a cellular infrastructure comprising a plurality of radio access technologies, RATs and cells, the method comprising:
S401: receiving, at the first UE, a synchronization message from at least one source or at least one RAT or at least one cell of the cellular infrastructure;
S402: assembling, at the first UE, a message comprising a first list including information on the at least one source or the at least one RAT or at least one cell from which the first UE received the synchronization message;
S403: transmitting, from the first UE, via the cellular infrastructure, the assembled message, to the second UE, and
S404: initiating synchronized peer-to-peer communication with the second UE based on the received synchronization message from the at least one source or at least one RAT or the at least one cell of the cellular infrastructure.

Additional detailed of the different exemplary embodiments of the present invention have already been described and are not repeated unnecessarily.

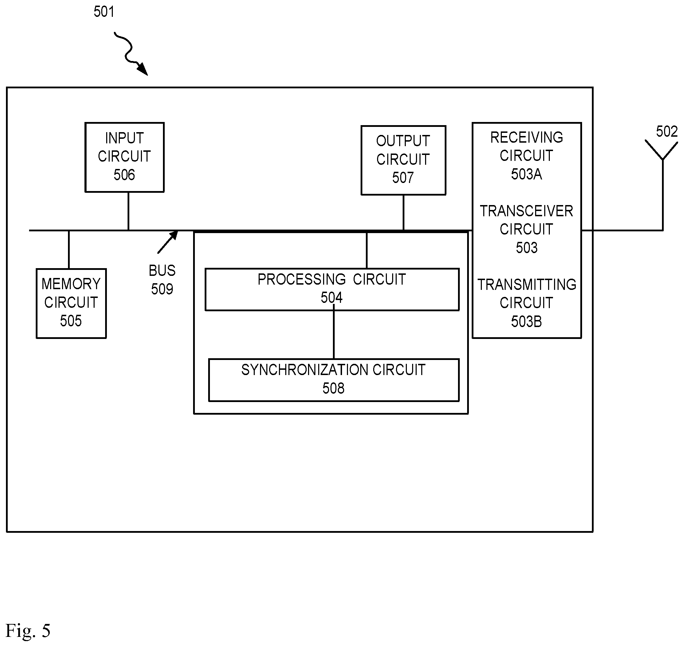

Referring now to Figure 5, there is illustrated a block diagram of exemplary components of a user equipment, UE 501 in accordance with the previously described embodiments. The UE 501 may be UE 203 or UE 204 previously depicted and described. As illustrated, the UE comprises an antenna 502, a transceiver circuit/unit 503 that may comprise a receiver circuit 503A and a transmitter circuit 503B, processing logic circuit/unit 504, a memory circuit/unit 505, an input device(s) circuit/unit 506, an output device(s) circuit/unit 507, a synchronization circuit 508 that may be part of the processing unit 504 or be a separate unit and a bus 509 to which the different circuit/ are connected. It should be noted that the transmitter circuit 503B and the receiver circuit 503A may be separate from the transceiver circuit 503.

Antenna 502 includes one or more antennas to transmit and/or receive radio frequency (RF) signals over the air interface. Antenna 502 may, for example, receive RF signals from transceiver circuit 503 and transmit the RF signals over the air interface to radio network nodes i.e. radio base stations e.g. eNodeBs or eNBs and receive RF signals over the air interface from radio base stations and provide the RF signals to transceiver circuit 503.
Transceiver circuit 503 may include, although not shown, for example, the transmitter that may convert baseband signals from processing logic circuit 504 to RF signals and/or a receiver that may convert RF signals to baseband signals. Alternatively, transceiver circuit includes a transceiver to perform functions of both a transmitter and a receiver. Transceiver 503 connects to antenna 502 for transmission and/or reception of the RF signals.
Processing logic circuit 504 includes a processor, microprocessor, an application specific integrated circuit (ASIC), field programmable gate array (FPGA), or the like. Processing logic 504 controls the operation of UE 501 and its components.
Memory circuit 505 includes a random access memory (RAM), a read only memory (ROM), and/or another type of memory to store data and instructions that may be used by processing logic 504. Input device(s) 506 include mechanisms for entry of data into UE 501. For example, input device(s) 506 may include input mechanisms, such as a microphone, input elements, a display, etc. Output device(s) 507 includes mechanisms for outputting data in audio, video and/or hard copy format. For example, output device(s) 507 may include a speaker, a display, etc.

Although Fig. 5 shows exemplary components of UE 501, in other implementations, UE 501 may contain fewer, different, or additional components than depicted in Fig.5. The terminology UE includes, but should not be limited to, a mobile station, a fixed or mobile subscriber unit, a pager, a cellular telephone, a personal digital assistant (PDA), a computer, or any other type of user device capable of operating in a wireless communication.

According to previously described embodiments, the receiver circuit 503A is configured to receive a synchronization message from at least one source or at least one RAT or at least one cell of the cellular infrastructure; the processing unit/circuit/logic 504 is configured to assemble a message comprising a first list including information on the at least one source or the at least one RAT or at least one cell from which the UE received the synchronization message; the transmitter circuit 503B is configured to transmit via the cellular infrastructure, the assembled message, to the other UE, and the synchronization circuit 508 is configured to initiate synchronized peer-to-peer communication with the other UE based on the received synchronization message from the at least one source or at least one RAT or the at least one cell of the cellular infrastructure.

It should be mentioned that this synchronizer or synchronization circuit does depend on what type of synchronization method and source UEs has agreed upon. But as mentioned previously, the present embodiments are not restricted to any particular type of synchronization method.

The receiver circuit 503A is further configured to receive from the other UE a message comprising a second list including information on at least one source or the at least one RAT or at least one cell from which the other UE received a synchronization message, and the synchronization circuit 508 and/or the processing unit 504 is/are further configured to negotiate with the other UE on a common source of synchronization based on information in the first list and in the second list. The synchronization circuit 508 is further configured to select a source or a RAT or a cell among the at least one source or the at least one RAT or the at least one cell included in said first list and/or in said second list for initiating said synchronized peer-to-peer communication with the other UE based on the selection. It should be noted that the synchronization circuit/unit 508 may depend on what type of synchronization method and the source or RAT or cell that the UEs has agreed upon. Hence a synchronization selection may be provided that selects which synchronizer should be used by UE 501. For example, this synchronizer may select a standard OFDM synchronizer in e.g. a case of a OFDM based system, that may analyze so-called Zadoff-Chu sequences and estimate carrier frequency offset(s) (CFO) or it may select a GPS based synch that is able to receive GPS signals and determine timing based on that. Hence, as previously described, the exemplary embodiments are not restricted to any particular synchronization method.

Referring back to Fig. 5, the processing unit/circuit/logic 504 is further configured to include in the assembled message information on synchronization messages received from the different sources or different RATs or different cells, and the processing unit is further configured to average over the received synchronization messages. The processing unit 504 is also configured to include in the assembled message information on a fixed point in time indicating when the UE and the other UE are to communicate which each other. The message received by receiver circuit 503A from the other UE may comprise an average of timing offsets previously received by the other UE from the different sources or different RATs or different cells as previously described. The synchronization circuit 508 is configured to select the source or the RAT or the cell sending the strongest signal; and the synchronization circuit and/or the processing unit is/are further configured to negotiate with the other UE on using the selected source or RAT or cell for receiving a synchronization message.

According to an embodiment, the assembled message is determined based on radio conditions of each source or each RAT or each cell of the list and/or is determined based on capabilities of the UE and/or the other UE and the message received by the receiver circuit 503 may include priority information on which one or more sources or RATs or cell of the cellular infrastructure that are preferred for enabling peer-to-peer communication between the UE and the other UE; the preference being based on one or more of: cell accuracy, received power, perceived quality, speed of obtaining synchronization and currently used frequency. Also, the message transmitted to the other UE comprises priority information on which one or more sources or RATs or cell of the cellular infrastructure that are preferred for enabling peer-to-peer communication between the UE and the other UE; the preference being based on one or more of: cell accuracy, received power, perceived quality, speed of obtaining synchronization and currently used frequency.

The processing unit 504 is further configured to trigger measurements on at least one source or at least one RAT or at least one cell not currently serving the first UE or the second UE for determining information on at least one cell or at least one RAT or at least one source to be included in said list, and the assembled message may include information on a current used frequency band.

As previously described, a cellular infrastructure is provided wherein the exemplary embodiments may be employed. The cellular infrastructure comprising a plurality of radio access technologies, RATs, cells, a first user equipment, UE, and a second UE being in proximity of one another for synchronizing between the first UE and the second UE for peer-to-peer communication between the first and second UEs. In the infrastructure the first UE is configured to receive a synchronization message from at least one source or at least one RAT or at least one cell of the cellular infrastructure; the first UE is further configured to assemble a message comprising a first list including information on the at least one source or the at least one RAT or at least one cell from which the first UE received the synchronization message; the first UE is further configured to transmit via the cellular infrastructure, the assembled message to the second UE; the second UE is configured to receive the assembled message and the second UE is configured to assemble a message is further configured to receive from the other UE a message comprising a second list including information on at least one source or the at least one RAT or at least one cell from which the second UE received a synchronization message; the first and second UEs are configured to negotiate on a common source of synchronization based on information in the first list and in the second list, and he first and/or the second UEs is/are configured to initiate synchronized peer-to-peer communication with the first and second UEs based on the respectively received synchronization messages from the at least one source or at least one RAT or the at least one cell of the cellular infrastructure

Throughout this disclosure, the word "comprise" or "comprising" has been used in a non-limiting sense, i.e. meaning "consist at least of". Although specific terms may be employed herein, they are used in a generic and descriptive sense only and not for purposes of limitation. In particular, it should be noted that although terminology from 3GPP LTE has been used in this disclosure to exemplify the invention, this should not be seen as limiting the scope of the invention to only the aforementioned system. Other wireless systems, including LTE-A (or LTE-Advanced), UMTS, WiMax, and wireless LAN, may also benefit from exploiting the ideas covered within this disclosure.

The present invention and its embodiments may be realized in many ways. For example, one embodiment includes a computer-UE. The instructions executable the UE and stored on a computer-readable medium perform the method as previously described and as described in the pending claims.

## Claims

1. A method for use in a user equipment, UE, (203, 204, 501) for synchronizing a first user equipment, UE, (203) with a second UE (204) for peer-to-peer communication between first and second UEs being in proximity of one another in a cellular infrastructure (200) comprising a plurality of radio access technologies, RATs and cells, the method comprising:
- receiving (S401), at the first UE (203), a synchronization message from at least one source or at least one RAT or at least one cell of the cellular infrastructure;
- assembling (S402), at the first UE (203), a message comprising a first list including information on the at least one source or the at least one RAT or at least one cell from which the first UE received the synchronization message;
- including in the assembled message information on synchronization messages received from the different sources or different RATs or different cells, and on an averaging over the received synchronization messages.
- transmitting (S403), from the first UE (203), via the cellular infrastructure (200), the assembled message, to the second UE (204), and
- initiating (S404) synchronized peer-to-peer communication with the second UE (204) based on the received synchronization message from the at least one source or at least one RAT or the at least one cell of the cellular infrastructure.

2. The method according to claim 1 further comprising receiving at the first UE (203) a message from second UE (204), the message comprising a second list including information on at least one source or the at least one RAT or at least one cell from which the second UE (204) received a synchronization message, and negotiating, between the first and second UEs on a common source of synchronization based on information in the first list and in the second list.

3. The method according to claim 1 or 2 further comprising selecting a source or a RAT or a cell among the at least one source or the at least one RAT or the at least one cell included in said first list and/or in said second list for initiating said synchronized peer-to-peer communication with the second UE (204) based on the selection.

4. The method according to claim 2 wherein said receiving (S404) the message from the second UE (204), the received message comprising an average of timing offsets received by the second UE (204) from the different sources or different RATs or different cells.

5. The method according to claim 3 wherein said selecting comprises selecting the source or the RAT or the cell sending the strongest signal; and negotiating with the second UE on using the selected source or RAT or cell for receiving a synchronization message.

6. The method according to any of preceding claims wherein said assembling (S402) the message, the list is determined based on radio conditions of each source or each RAT or each cell of the list and/or is determined based on capabilities of the first UE and/or the second UE.

7. The method according to anyone of claims 2-4, 6 wherein receiving (S404) the message from the second UE (204), the received message including priority information on which one or more sources or RATs or cell of the cellular infrastructure that are preferred for enabling peer-to-peer communication between the first UE(203) and the second UE (204); the preference being based on one or more of: cell accuracy, received power, perceived quality, speed of obtaining synchronization and currently used frequency.

8. The method according to anyone of preceding claims wherein transmitting (S403) the message to the second UE (204), the transmitted message including priority information on which one or more sources or RATs or cell of the cellular infrastructure that are preferred for enabling peer-to-peer communication between the first UE (203) and the second UE (204); the preference being based on one or more of: cell accuracy, received power, perceived quality, speed of obtaining synchronization and currently used frequency.

9. The method according to anyone of preceding claims further comprises triggering measurements on at least one source or at least one RAT or at least one cell not currently serving the first UE (203) or the second UE (204) for determining information on at least one cell or at least one RAT or at least one source to be included in said list.

10. The method according to anyone of preceding claims wherein assembling (S402) the message comprises including in the message information on a current used frequency band.

11. A user equipment, UE, (203, 204, 501) for synchronizing with another UE (203, 204, 501) for peer-to-peer communication between the UE (203, 204, 501) and the other UE (204, 203 501) being in proximity of one another in a cellular infrastructure (200) comprising a plurality of radio access technologies, RATs and cells, the UE (203, 204, 501) comprising:
- a receiver circuit (503A) configured to receive a synchronization message from at least one source or at least one RAT or at least one cell of the cellular infrastructure;
- a processing unit (504) configured to assemble a message comprising a first list including information on the at least one source or the at least one RAT or at least one cell from which the UE received the synchronization message; wherein the processing unit (504) is configured to include in the assembled message information on synchronization messages received from the different sources or different RATs or different cells, and the processing unit (504) is further configured to average over the received synchronization messages and to include in the assembled message the average.
- a transmitter circuit (503B) configured to transmit via the cellular infrastructure, the assembled message, to the other UE, and
- a synchronization circuit (508) configured to initiate synchronized peer-to-peer communication with the other UE based on the received synchronization message from the at least one source or at least one RAT or the at least one cell of the cellular infrastructure.

12. The UE (203, 204, 501) according to claim 11 wherein the receiver circuit (503A) is further configured to receive from the other UE (204, 203, 501) a message comprising a second list including information on at least one source or the at least one RAT or at least one cell from which the other UE (204, 203, 501) received a synchronization message, and the synchronization circuit (508) and/or the processing unit (504) is/are further configured to negotiate with the other UE (204, 203, 501) on a common source of synchronization based on information in the first list and in the second list.

13. The UE(203, 204, 501) according to claim 11 or 12 wherein the synchronization circuit (508) is further configured to select a source or a RAT or a cell among the at least one source or the at least one RAT or the at least one cell included in said first list and/or in said second list for initiating said synchronized peer-to-peer communication with the other UE (204, 203, 501) based on the selection.

14. The UE according (203, 204, 501) to claim 13 wherein the message received by receiver circuit (503A) from the other UE (204, 203, 501), comprises an average of timing offsets previously received by the other UE (204, 203, 501) from the different sources or different RATs or different cells.

15. The UE (203, 204, 501) according to claim 14 wherein said synchronization circuit (508) is configured to select the source or the RAT or the cell sending the strongest signal; and the synchronization circuit (508) and/or the processing unit (504) is/are further configured to negotiate with the other UE (204, 203, 501) on using the selected source or RAT or cell for receiving a synchronization message.

16. The UE (203, 204, 501) according to anyone of claims 11-15 wherein the list in the assembled message is determined based on radio conditions of each source or each RAT or each cell of the list and/or is determined based on capabilities of the UE (203, 204, 501) and/or the other UE (204, 203, 501).

17. The UE (203, 204, 501) according to anyone of claims 11-16 wherein the message received by the receiver circuit (503A) includes priority information on which one or more sources or RATs or cell of the cellular infrastructure that are preferred for enabling peer-to-peer communication between the UE (203, 204, 501) and the other UE (204, 203, 501); the preference being based on one or more of: cell accuracy, received power, perceived quality, speed of obtaining synchronization and currently used frequency.

18. The UE (203, 204, 501) according to anyone of claims 11-17 wherein the message transmitted to the other UE (204, 203, 501) comprises priority information on which one or more sources or RATs or cell of the cellular infrastructure that are preferred for enabling peer-to-peer communication between the UE (203, 204, 501) and the other UE (204, 203, 501); the preference being based on one or more of: cell accuracy, received power, perceived quality, speed of obtaining synchronization and currently used frequency.

19. The UE (203, 204, 501) according to anyone of claims 11-18 wherein the processing unit (504) is further configured to trigger measurements on at least one source or at least one RAT or at least one cell not currently serving the UE (203, 204, 501) or the other UE (204, 203, 501) for determining information on at least one cell or at least one RAT or at least one source to be included in said list.

20. The UE (203, 204, 501) according to anyone of claims 11-19 wherein the assembled message includes information on a current used frequency band.

## Patentansprüche

1. Verfahren zur Benutzung in einem Teilnehmergerät, UE, (203, 204, 501) zum Synchronisieren eines ersten Teilnehmergeräts, UE, (203) mit einem zweiten UE (204) für eine Peer-to-Peer-Kommunikation zwischen ersten und zweiten UEs, die nahe zueinander in einer zellulären Infrastruktur (200) sind, wobei die Infrastruktur eine Vielzahl von Funkzugangstechnologien, RAT, und Zellen umfasst, wobei das Verfahren umfasst:
- Empfangen (S401), an dem erstem UE (203), einer Synchronisationsnachricht von zumindest einer Quelle oder zumindest einer RAT oder zumindest einer Zelle der zellulären Infrastruktur;
- Zusammensetzen (S402), am ersten UE (203), einer Nachricht umfassend eine erste Liste, wobei die erste Liste Informationen über die zumindest eine Quelle oder die zumindest eine RAT oder die zumindest eine Zelle, von welcher das erste UE die Synchronisationsnachricht erhaltet hat, beinhaltet;
- Einfügen in die zusammengesetzte Nachricht von Informationen über von den verschiedenen Quellen oder verschiedenen RATs oder verschiedenen Zellen empfangenen Synchronisationsnachrichten und über ein Bilden eines Durchschnitts von den empfangenen Synchronisationsnachrichten;
- Senden (S403) der zusammengesetzten Nachricht von dem ersten UE (203) an das zweite UE (204) über die zelluläre Infrastruktur (200); und
- Initiieren (S404) einer synchronisierten Peer-to-Peer-Kommunikation mit dem zweiten UE (204) basierend auf der empfangen Synchronisationsnachricht von der zumindest einen Quelle oder zumindest einen RAT oder der zumindest einen Zelle der zellulären Infrastruktur.

2. Verfahren nach Anspruch 1, ferner umfassend ein Empfangen an dem ersten UE (203) einer Nachricht von dem zweiten UE (204), wobei die Nachricht eine zweite Liste umfasst, die Informationen über zumindest eine Quelle oder die zumindest eine RAT oder zumindest eine Zelle, von welcher das zweite UE (204) eine Synchronisationsnachricht erhielt, beinhaltet, und ein Aushandeln zwischen den ersten und zweiten UEs einer gemeinsamen Quelle zur Synchronisation basierend auf Informationen in der ersten Liste und in der zweiten Liste.

3. Verfahren nach Anspruch 1 oder Anspruch 2, ferner umfassend ein Auswählen einer Quelle oder einer RAT oder einer Zelle aus der in der ersten Liste und/oder der zweiten Liste enthaltenen zumindest einen Quelle oder der zumindest einen RAT oder zumindest einen Zelle zum Initiieren der synchronisierten Peer-to-Peer-Kommunikation mit dem zweiten UE (204) basierend auf der Auswahl.

4. Verfahren nach Anspruch 2, wobei für das Empfangen (S404) der Nachricht von dem zweiten UE (204) die empfangene Nachricht einen Durchschnitt von Zeitversätzen umfasst, wobei die Zeitversätze von dem zweiten UE (204) von den verschiedenen Quellen oder verschiedenen RATs oder verschiedenen Zellen empfangen wurden.

5. Verfahren nach Anspruch 3, wobei das Auswählen umfasst: ein Auswählen der Quelle oder der RAT oder der Zelle, die das stärkste Signal sendet; und ein Verhandeln mit dem zweiten UE über ein Benutzen der ausgewählten Quelle oder RAT oder Zelle für ein Empfangen einer Synchronisationsnachricht.

6. Verfahren nach einem der vorhergehenden Ansprüche, wobei für das Zusammensetzen (S402) der Nachricht die Liste basierend auf Funkbedingungen von jeder Quelle oder jeder RAT oder jeder Zelle der Liste bestimmt wird und/oder basierend auf Fähigkeiten des ersten UE und/oder des zweiten UE bestimmt wird.

7. Verfahren nach einem der Ansprüche 2-4, 6, wobei für ein Empfangen (S404) der Nachricht von dem zweiten UE (204) die empfangene Nachricht Prioritätsinformationen beinhaltet, welche eine oder mehrere Quellen oder RATs oder Zellen der zellulären Infrastruktur für ein Ermöglichen einer Peer-to-Peer-Kommunikation zwischen dem ersten UE (203) und dem zweiten UE (204) bevorzugt sind; wobei die Bevorzugung auf einem oder mehreren basiert aus: Zellengenauigkeit, empfangene Leistung, wahrgenommene Qualität, Geschwindigkeit eines Erhaltens einer Synchronisation und gegenwärtig benutzte Frequenz.

8. Verfahren nach einem der vorhergehenden Ansprüche, wobei für ein Senden (S405) der Nachricht an das zweite UE (204) die gesendete Nachricht Prioritätsinformationen beinhaltet, welche eine oder mehrere Quellen oder RATs oder Zellen der zellulären Infrastruktur für ein Ermöglichen einer Peer-to-Peer-Kommunikation zwischen dem ersten UE (203) und dem zweiten UE (204) bevorzugt sind; wobei die Bevorzugung auf einem oder mehreren basiert aus: Zellengenauigkeit, empfangene Leistung, wahrgenommene Qualität, Geschwindigkeit eines Erhaltens einer Synchronisation und gegenwärtig benutzte Frequenz.

9. Verfahren nach einem der vorhergehenden Ansprüche, ferner umfassend ein Auslösen von Messungen an zumindest einer Quelle oder zumindest einer RAT oder zumindest einer Zelle, die gegenwärtig nicht ein erstes UE (203) oder ein zweites UE bedient (204), für ein Bestimmen von Informationen über zumindest eine Zelle oder zumindest eine RAT oder zumindest eine Quelle, die in der Liste enthalten sein soll.

10. Verfahren nach einem der vorhergehenden Ansprüche, wobei das Zusammensetzen (S402) der Nachricht ein Einfügen von Informationen über ein gegenwärtig benutztes Frequenzband in die Nachricht umfasst.

11. Teilnehmergerät, UE, (203, 204, 501) zum Synchronisieren mit einem anderen UE (203, 204, 501) für eine Peer-to-Peer-Kommunikation zwischen dem UE (203, 204, 501) und dem anderen UE (204, 203, 501), die nahe zueinander in einer zellulären Infrastruktur (200) sind, wobei die Infrastruktur eine Vielzahl von Funkzugangstechnologien, RAT, und Zellen umfasst, wobei das UE (203, 204, 501) umfasst:
- eine Empfangsschaltung (502A), ausgebildet zum Empfangen einer Synchronisationsnachricht von zumindest einer Quelle oder zumindest einer RAT oder zumindest einer Zelle der zellulären Infrastruktur;
- eine Verarbeitungseinheit (504), ausgebildet zum Zusammensetzen einer Nachricht umfassend eine erste Liste, wobei die erste Liste Informationen beinhaltet über die zumindest eine Quelle oder die zumindest eine RAT oder die zumindest eine Zelle, von welcher das UE die Synchronisationsnachricht erhalten hat; wobei die Verarbeitungseinheit (504) ausgebildet ist zum Einfügen in die zusammengesetzte Nachricht von Informationen über von den verschiedenen Quellen oder verschiedenen RATs oder verschiedenen Zellen empfangenen Synchronisationsnachrichten und wobei die Verarbeitungseinheit (504) ferner ausgebildet ist zum Bilden eines Durchschnitts von empfangenen Synchronisationsnachrichten und zum Einfügen des Durchschnitts in die zusammengesetzte Nachricht;
- eine Sendeschaltung (503B), ausgebildet zum Senden der zusammengesetzten Nachricht an das andere UE über die zelluläre Infrastruktur; und
- eine Synchronisierungsschaltung (508), ausgebildet zum Initiieren einer synchronisierten Peer-to-Peer-Kommunikation mit dem anderen UE basierend auf der empfangen Synchronisationsnachricht von der zumindest einen Quelle oder zumindest einen RAT oder der zumindest einen Zelle der zellulären Infrastruktur.

12. UE (203, 204, 501) nach Anspruch 11, wobei die Empfangsschaltung (503A) ferner ausgebildet ist zum Empfangen einer Nachricht von dem anderen UE (204, 203, 501), wobei die Nachricht eine zweite Liste umfasst, die Informationen über zumindest eine Quelle oder die zumindest eine RAT oder zumindest eine Zelle beinhaltet, von welcher das andere UE (204, 203, 501) eine Synchronisationsnachricht erhielt, und wobei die Synchronisierungsschaltung (508) und/oder die Verarbeitungseinheit (504) ferner ausgebildet ist/sind zum Aushandeln mit dem anderen UE (204, 203, 501) einer gemeinsamen Synchronisationsquelle basierend auf Informationen in der ersten Liste und in der zweiten Liste.

13. UE (203, 204, 501) nach Anspruch 11 oder 12, wobei die Synchronisierungsschaltung (508) ferner ausgebildet ist zum Auswählen einer Quelle oder einer RAT oder einer Zelle unter der in der ersten Liste und/oder der zweiten Liste enthaltenen zumindest einen Quelle oder der zumindest einen RAT der zumindest einen Zelle zum Initiieren der synchronisierten Peer-to-Peer-Kommunikation mit dem anderen UE (204, 203, 501) basierend auf der Auswahl.

14. UE (203, 204, 501) nach Anspruch 13, wobei die von der Empfangsschaltung (503A) empfangene Nachricht von dem anderen UE (204, 203, 501) einen Durchschnitt von Zeitversätzen umfasst, wobei die Zeitversätze vorher von dem anderen UE (204, 203, 501) von den verschiedenen Quellen oder verschiedenen RATs oder verschiedenen Zellen empfangen wurden.

15. UE (203, 204, 501) nach Anspruch 14, wobei die Synchronisierungsschaltung (508) ausgebildet ist zum Auswählen der Quelle oder der RAT oder der Zelle, die das stärkste Signal sendet; und wobei die Synchronisierungsschaltung (508) und/oder die Verarbeitungseinheit (504) ferner ausgebildet ist/sind zum Verhandeln mit dem anderen UE (204, 203, 501) über ein Benutzen der ausgewählten Quelle oder RAT oder Zelle für ein Empfangen einer Synchronisationsnachricht.

16. UE (203, 204, 501) nach einem der Ansprüche 11-15, wobei die Liste in der zusammengesetzten Nachricht basierend auf Funkbedingungen von jeder Quelle oder jeder RAT oder jeder Zelle der Liste bestimmt wird und/oder basierend auf Fähigkeiten des UE (203, 204, 501) und/oder des anderen UE (204, 203, 501) bestimmt wird.

17. UE (203, 204, 501) nach einem der Ansprüche 11-16, wobei die von der Empfangsschaltung (503A) empfangene Nachricht Prioritätsinformationen beinhaltet, welche eine oder mehrere Quellen oder RATs oder Zellen der zellulären Infrastruktur für ein Ermöglichen einer Peer-to-Peer-Kommunikation zwischen dem UE (203, 204, 501) und dem anderen UE (204, 203, 501) bevorzugt sind; wobei die Bevorzugung auf einem oder mehreren basiert aus: Zellengenauigkeit, empfangene Leistung, wahrgenommene Qualität, Geschwindigkeit eines Erhaltens einer Synchronisation und gegenwärtig benutzte Frequenz.

18. UE (203, 204, 501) nach einem der Ansprüche 11-17, wobei die an das andere UE (204, 203, 501) gesendete Nachricht Prioritätsinformationen beinhaltet, welche eine oder mehrere Quellen oder RATs oder Zell der zellulären Infrastruktur für ein Ermöglichen einer Peer-to-Peer-Kommunikation zwischen dem UE (203, 204, 501) und dem anderen UE (204, 203, 501) bevorzugt werden; wobei die Bevorzugung auf einem oder mehreren basiert aus: Zellengenauigkeit, empfangene Leistung, wahrgenommene Qualität, Geschwindigkeit eines Erhaltens einer Synchronisation und gegenwärtig benutzte Frequenz.

19. UE (203, 204, 501) nach einem der Ansprüche 11-18, wobei die Verarbeitungseinheit (504) ferner ausgebildet ist zum Auslösen von Messungen an zumindest einer Quelle oder zumindest einer RAT oder zumindest einer Zelle, die gegenwärtig nicht das UE (203, 204, 501) oder das andere UE (204, 203, 501) bedient, für ein Bestimmen von Informationen über zumindest eine Zelle oder zumindest eine RAT oder zumindest eine Quelle, die in der Liste enthalten sein soll.

20. UE (203, 204, 501) nach einem der Ansprüche 11-19, wobei die zusammengesetzte Nachricht Informationen über ein gegenwärtig benutztes Frequenzband enthält.

## Revendications

1. Procédé destiné à être utilisé dans un équipement d'utilisateur, UE, (203, 204, 501) pour synchroniser un premier équipement d'utilisateur, UE, (203) avec un deuxième UE (204) pour une communication de pair à pair entre le premier UE et le deuxième UE étant à proximité l'un de l'autre dans une infrastructure cellulaire (200) comprenant une pluralité de technologies d'accès radio, RAT, et de cellules, le procédé comprenant :
- la réception (S401), au premier UE (203), d'un message de synchronisation en provenance d'au moins une source ou d'au moins une RAT ou d'au moins une cellule de l'infrastructure cellulaire ;
- l'assemblage (S402), au premier UE (203), d'un message comprenant une première liste comprenant des informations relatives à l'au moins une source ou à l'au moins une RAT ou à l'au moins une cellule en provenance de laquelle le premier UE a reçu le message de synchronisation ;
- l'inclusion, dans le message assemblé, d'informations relatives à des messages de synchronisation reçus en provenance des différentes sources ou des différentes RAT ou des différentes cellules, et relatives à un calcul de moyenne sur les messages de synchronisation reçus ;
- la transmission (S403), à partir du premier UE (203), par l'intermédiaire de l'infrastructure cellulaire (200), du message assemblé, au deuxième UE (204), et
- le lancement (S404) d'une communication de pair à pair synchronisée avec le deuxième UE (204) sur la base du message de synchronisation reçu à partir de l'au moins une source ou de l'au moins une RAT ou de l'au moins une cellule de l'infrastructure cellulaire.

2. Procédé selon la revendication 1, comprenant en outre la réception, au premier UE (203), d'un message en provenance du deuxième UE (204), le message comprenant une deuxième liste comprenant des informations relatives à au moins une source ou à au moins une RAT ou à au moins une cellule en provenance de laquelle le deuxième UE (204) a reçu un message de synchronisation, et la négociation entre le premier UE et le deuxième UE sur une source commune de synchronisation sur la base d'informations dans la première liste et dans la deuxième liste.

3. Procédé selon la revendication 1 ou 2, comprenant en outre la sélection d'une source ou d'une RAT ou d'une cellule parmi l'au moins une source ou l'au moins une RAT ou l'au moins une cellule incluse dans ladite première liste et/ou dans ladite deuxième liste pour lancer ladite communication de pair à pair synchronisée avec le deuxième UE (204) sur la base de la sélection.

4. Procédé selon la revendication 2, dans lequel, ladite réception (S404) du message en provenance du deuxième UE (204), le message reçu comprenant une moyenne de décalages de timing reçus par le deuxième UE (204) en provenance des différentes sources ou des différentes RAT ou des différentes cellules.

5. Procédé selon la revendication 3, dans lequel ladite sélection comprend la sélection de la source ou de la RAT ou de la cellule envoyant le plus fort signal ; et la négociation avec le deuxième UE sur l'utilisation de la source sélectionnée ou de la RAT sélectionnée ou de la cellule sélectionnée pour la réception d'un message de synchronisation.

6. Procédé selon l'une quelconque des revendications précédentes, dans lequel, leau dit assemblage (S402) du message, la liste est déterminée sur la base de conditions radio de chaque source ou de chaque RAT ou de chaque cellule de la liste et/ou est déterminée sur la base de capacités du premier UE et/ou du deuxième UE.

7. Procédé selon l'une quelconque des revendications 2 à 4 et 6, dans lequel, à la réception (S404) du message en provenance du deuxième UE (204), le message reçu comprend des informations de priorité indiquant une ou plusieurs sources ou RAT ou cellules de l'infrastructure cellulaire qui sont préférées pour permettre une communication de pair à pair entre le premier UE (203) et le deuxième UE (204) ; la préférence étant basée sur une ou plusieurs de : une précision de cellule, une puissance de réception , une qualité de perception, une vitesse d'obtention de synchronisation et une fréquence en cours d'utilisation.

8. Procédé selon l'une quelconque des revendications précédentes, dans lequel, à la transmission (S403) du message au deuxième UE (204), le message transmis comprend des informations de priorité indiquant une ou plusieurs sources ou RAT ou cellules de l'infrastructure cellulaire qui sont préférées pour permettre une communication de pair à pair entre le premier UE (203) et le deuxième UE (204) ; la préférence étant basée sur une ou plusieurs de : une précision de cellule, une puissance de réception, une qualité de perception, une vitesse d'obtention de synchronisation et une fréquence en cours d'utilisation.

9. Procédé selon l'une quelconque des revendications précédentes, comprenant en outre le déclenchement de mesures sur au moins une source ou au moins une RAT ou au moins une cellule qui ne dessert pas actuellement le premier UE (203) ou le deuxième UE (204) pour déterminer des informations relatives à au moins une cellule ou au moins une RAT ou au moins une source à inclure dans ladite liste.

10. Procédé selon l'une quelconque des revendications précédentes, dans lequel l'assemblage (S402) du message comprend l'inclusion, dans le message, d'informations relatives à une bande de fréquences en cours d'utilisation.

11. Equipement d'utilisateur, UE, (203, 204, 501) destiné à se synchroniser avec un autre UE (203, 204, 501) pour une communication de pair à pair entre l'UE (203, 204, 501) et l'autre UE (204, 203, 501) étant à proximité l'un de l'autre dans une infrastructure cellulaire (200) comprenant une pluralité de technologies d'accès radio, RAT, et de cellules, l'UE (203, 204, 501) comprenant :
- un circuit récepteur (503A) configuré pour effectuer la réception d'un message de synchronisation en provenance d'au moins une source ou d'au moins une RAT ou d'au moins une cellule de l'infrastructure cellulaire ;
- une unité de traitement (504) configurée pour effectuer l'assemblage d'un message comprenant une première liste comprenant des informations relatives à l'au moins une source ou à l'au moins une RAT ou à l'au moins une cellule en provenance de laquelle l'UE a reçu le message de synchronisation ; dans lequel l'unité de traitement (504) est configurée pour effectuer l'inclusion, dans le message assemblé, d'informations relatives à des messages de synchronisation reçus en provenance de différentes sources ou de différentes RAT ou de différentes cellules, et l'unité de traitement (504) est en outre configurée pour effectuer un calcul de moyenne sur les messages de synchronisation reçus et l'inclusion de la moyenne dans le message assemblé ;
- un circuit émetteur (503B) configurée pour effectuer la transmission, par l'intermédiaire de l'infrastructure cellulaire, du message assemblé, à l'autre UE, et
- un circuit de synchronisation (508) configuré pour effectuer le lancement d'une communication de pair à pair synchronisée avec l'autre UE sur la base du message de synchronisation reçu à partir de l'au moins une source ou de l'au moins une RAT ou de l'au moins une cellule de l'infrastructure cellulaire.

12. UE (203, 204, 501) selon la revendication 11, dans lequel le circuit récepteur (503A) est en outre configuré pour effectuer la réception, en provenance de l'autre UE (204, 203, 501), d'un message comprenant une deuxième liste comprenant des informations relatives à au moins une source ou à au moins une RAT ou à au moins une cellule en provenance de laquelle l'autre UE (204, 203, 501) a reçu un message de synchronisation, et le circuit de synchronisation (508) et/ou l'unité de traitement (504) sont en outre configurés pour effectuer la négociation avec l'autre UE (204, 203, 501) sur une source commune de synchronisation sur la base d'informations dans la première liste et dans la deuxième liste.

13. UE (203, 204, 501) selon la revendication 11 ou 12, dans lequel le circuit de synchronisation (508) est en outre configuré pour effectuer la sélection d'une source ou d'une RAT ou d'une cellule parmi l'au moins une source ou l'au moins une RAT ou l'au moins une cellule incluse dans ladite première liste et/ou dans ladite deuxième liste pour lancer ladite communication de pair à pair synchronisée avec l'autre UE (204, 203, 501) sur la base de la sélection.

14. UE (203, 204, 501) selon la revendication 13, dans lequel le message reçu par le circuit récepteur (503A) en provenance de l'autre UE (204, 203, 501) comprend une moyenne de décalages de timing précédemment reçus par l'autre UE (204, 203, 501) en provenance des différentes sources ou des différentes RAT ou des différentes cellules.

15. UE (203, 204, 501) selon la revendication 14, dans lequel ledit circuit de synchronisation (508) est configuré pour effectuer la sélection de la source ou de la RAT ou de la cellule envoyant le plus fort signal ; et le circuit de synchronisation (508) et/ou l'unité de traitement (504) sont en outre configurés pour effectuer la négociation avec l'autre UE (204, 203, 501) sur l'utilisation de la source sélectionnée ou de la RAT sélectionnée ou de la cellule sélectionnée pour la réception d'un message de synchronisation.

16. UE (203, 204, 501) selon l'une quelconque des revendications 11 à 15, dans lequel la liste dans le message assemblé est déterminée sur la base de conditions radio de chaque source ou de chaque RAT ou de chaque cellule de la liste et/ou est déterminée sur la base de capacités de l'UE (203, 204, 501) et/ou de l'autre UE (204, 203, 501).

17. UE (203, 204, 501) selon l'une quelconque des revendications 11 à 16, dans lequel le message reçu par le circuit récepteur (503A) comprend des informations de priorité indiquant une ou plusieurs sources ou RAT ou cellules de l'infrastructure cellulaire qui sont préférées pour permettre une communication de pair à pair entre l'UE (203, 204, 501) et l'autre UE (204, 203, 501) ; la préférence étant basée sur une ou plusieurs de : une précision de cellule, une puissance de réception, une qualité de perception, une vitesse d'obtention de synchronisation et une fréquence en cours d'utilisation.

18. UE (203, 204, 501) selon l'une quelconque des revendications 11 à 17, dans lequel le message transmis à l'autre UE (204, 203, 501) comprend des informations de priorité indiquant une ou plusieurs sources ou RAT ou cellules de l'infrastructure cellulaire qui sont préférées pour permettre une communication de pair à pair entre l'UE (203, 204, 501) et l'autre UE (204, 203, 501) ; la préférence étant basée sur une ou plusieurs de : une précision de cellule, une puissance de réception, une qualité de perception, une vitesse d'obtention de synchronisation et une fréquence en cours d'utilisation.

19. UE (203, 204, 501) selon l'une quelconque des revendications 11 à 18, dans lequel l'unité de traitement (504) est en outre configurée pour effectuer le déclenchement de mesures sur au moins une source ou au moins une RAT ou au moins une cellule qui ne dessert pas actuellement l'UE (203, 204, 501) ou l'autre UE (204, 203, 501) pour déterminer des informations relatives à au moins une cellule ou au moins une RAT ou au moins une source à inclure dans ladite liste.

20. UE (203, 204, 501) selon l'une quelconque des revendications 11 à 19, dans lequel le message assemblé comprend des informations relatives à une bande de fréquences en cours d'utilisation.
